# EUROPÄISCHE PATENTSCHRIFT

(11) **EP 3 289 265 B1**
(45) Veröffentlichungstag und Bekanntmachung des Hinweises auf die Patenterteilung: **18.05.2022**
(21) Anmeldenummer: 16719070.1
(22) Anmeldetag: 27.04.2016
(51) Int. Cl.: F16L 5/04, A62C 2/06, H02G 3/22, H02G 3/04

(54) **BRANDSCHUTZMANSCHETTE**
FLAME RETARDANT SLEEVE
MANCHETTE COUPE-FEU

(30) Priorität: 27.04.2015 EP 15165180
(43) Veröffentlichungstag der Anmeldung: 07.03.2018
(73) Patentinhaber: Hilti Aktiengesellschaft, 9494 Schaan (LI)
(72) Erfinder: MÜNZENBERGER, Herbert, 65191 Wiesbaden (DE)
(74) Vertreter: Hilti Aktiengesellschaft Corporate Intellectual Property
(86) Internationale Anmeldenummer: PCT/EP2016/059344
(87) Internationale Veröffentlichungsnummer: WO 2016/174055

(56) Entgegenhaltungen:
- EP-A2- 0 982 522
- WO-A1-91/19540
- DE-A1-102008 003 120
- DE-U1- 9 411 293
- US-A- 4 916 800
- US-A1- 2012 207 961

## Beschreibung

Die Erfindung betrifft eine Brandschutzmanschette zum Abschotten von durch Wände oder Decken führende Öffnungen, insbesondere von Leitungsdurchgängen mit einem Rahmen und einem darin angeordneten Block aus gegebenenfalls intumeszierendem Material.

Brandschutzmanschetten, die Leitungsdurchgänge mit nicht feuerfesten Rohren oder Kabeln in Decken oder Wänden im Brandfall schließen können, um eine Ausbreitung von Feuer und Rauch in Gebäuden zu verhindern, sind in verschiedensten Ausgestaltungen bekannt. Die Brandschutzmanschetten enthalten üblicherweise ein intumeszierendes Material, das um die Leitungen angeordnet wird, und einem Rahmen aus Blech, der das intumeszierende Material ummantelt und zur Befestigung des intumeszierenden Materials an Wänden oder Decken dient. Die Brandschutzmanschetten werden üblicherweise vor den Öffnungen um die hindurchführenden Leitungen angebracht, da dort die Montage einfacher ist.

Die DE 10 2008 003120 A1 zeigt beispielsweise eine Brandschutzmanschette der eingangs genannten Art, die aus einem Block aus intumeszierendem Material und einem diesen umgebenden Rahmen besteht.

Aus der EP 2 455 135 A2 ist ein Brandschutzelement bekannt, das zusätzlich zu dem intumeszierenden Material eine Verstärkungseinlage aufweist, welches im Brandfall die entstehende Ascheschicht stabilisiert.

Nachteilig bei den bekannten Brandschutzmanschetten ist, dass diese nur für kleine Öffnungsquerschnitte geeignet sind, da bei großen Querschnitten das Brandschutzelement instabil wird und die Aschekruste aus dem Rahmen herausfallen kann. Dies führt zu deutlich schlechteren Brandschutzeigenschaften und macht bekannte Brandschutzmanschetten daher für große Öffnungsquerschnitte ungeeignet. Aufgabe der Erfindung ist es, eine Brandschutzmanschette zu schaffen, die auch bei größeren Öffnungsquerschnitten einen zuverlässigen Brandschutz gewährt.

Zur Lösung dieser Aufgabe ist eine Brandschutzmanschette zum Abschotten von durch Wände oder Decken hindurchführende Öffnungen, insbesondere von Leitungsdurchgängen, mit einem Rahmen und zumindest einem darin angeordneten Block aus gegebenenfalls intumeszierendem Material vorgesehen, wobei zwischen dem Block und dem Rahmen eine intumeszierende Einlage angeordnet ist, wobei der Block den vom Rahmen und intumeszierender Einlage umspannten Raum bis auf gegebenenfalls hindurchgehende Rohre ausfüllt, und wobei der Rahmen mehrere Seitenabschnitte aufweist, die den Block an dessen Seitenrändern umgeben, gekennzeichnet durch mehrere sich senkrecht zu den Seitenabschnitten erstreckenden Frontabschnitte und dadurch, dass dass Block um 2 bis 6 mm höher ist als die Seitenabschnitte, und dass an den Seitenabschnitten mehrere Befestigungslaschen vorgesehen sind.

Im Brandfall führt die Hitze dazu, dass die intumeszierende Einlage aktiviert wird und expandiert. Bevorzugt besteht der Block aus intumeszierendem Material, so dass durch die Verwendung verschiedener intumeszierender Materialien mit unterschiedlichen Eigenschaften, beispielsweise hinsichtlich Aktivierungstemperatur und Ausdehnungsverhalten, für die intumeszierende Einlage und den Block aus gegebenenfalls intumeszierendem Material die Druckverläufe über die Branddauer so angepasst werden können, dass die Stabilität der entstehenden Aschekruste des gegebenenfalls intumeszierenden Blocks verbessert wird. Diese Merkmale erlauben es, deutlich größere Öffnungsquerschnitte mit dieser Brandschutzmanschette abzudecken, ohne dass die aus dem Stand der Technik bekannten Probleme hinsichtlich der Stabilität auftreten. Insbesondere sind mit der erfindungsgemäßen Brandschutzmanschette Öffnungsgrößen von 100 mm x 300 mm bis 150 mm x 750 mm abschottbar.

Der Rahmen der Brandschutzmanschette weist erfindungsgemäß mehrere Seitenabschnitte auf, die den Block aus gegebenenfalls intumeszierendem Material an dessen Seitenrändern umgeben, und mehrere sich senkrecht zu den Seitenabschnitten erstreckende Frontabschnitte. Diese Gestaltung des Rahmens sorgt dafür, dass der Block aus gegebenenfalls intumeszierendem Material sicher befestigt ist und im Brandfall gerichtet expandiert, um seine Brandschutzeigenschaften optimal zur Geltung zu bringen.

Die Höhe des Blocks aus gegebenenfalls intumeszierendem Material ist geringfügig größer als die Höhe der Seitenabschnitte. Hierdurch verfügt die Brandschutzmanschette über einen wandseitigen Überstand des gegebenenfalls intumeszierenden Materials, so dass dieses bei der Montage mit Vorspannung an die Oberfläche der Wand oder Decke gedrückt wird.

Erfindungsgemäß beträgt dieser Überstand 2 mm bis 6 mm, was zu einer optimalen Anpresswirkung führt.

In einer bevorzugten Ausführungsform erstreckt sich die intumeszierende Einlage entlang mindestens einem der Seitenabschnitte. Alternativ kann sich die intumeszierende Einlage zusätzlich auch noch entlang des dem Seitenabschnitt zugeordneten Frontabschnittes erstrecken. Durch diese Ausgestaltung sind die wirkenden Kräfte, die die intumeszierende Einlage auf den Block aus gegebenenfalls intumeszierendem Material ausübt, vorteilhaft gerichtet, nämlich nach innen und zur Wand bzw. Decke.

Der Block besteht in einer Ausführungsform aus einem schäumbaren Material. Hierdurch wird neben der Rauchgasdichtigkeit auch eine Schalldämmung sichergestellt. In einer bevorzugten Ausführungsform besteht der Block aus einem schäumbaren Bindemittel, das wenigstens ein aschebildendes und gegebenenfalls intumeszierendes Stoffgemisch enthält. Das Bindemittel dient dabei als verbundbildender Träger für das aschebildende und gegebenenfalls intumeszierende Stoffgemisch. Bevorzugt ist das Stoffgemisch homogen in dem Bindemittel verteilt. Der verbundbildende Träger ist bevorzugt aus der Gruppe ausgewählt, bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Cellulose, Elastomeren und Gemischen davon, wobei Polyurethane bevorzugt sind.

Das aschebildende und gegebenenfalls intumeszierende Stoffgemisch umfasst die üblichen und dem Fachmann bekannten Brandschutzadditive, welche im Brandfall, also unter Hitzeeinwirkung aufschäumen und dabei einen die Flammenausbreitung hindernden Schaum ausbilden, wie ein intumeszierendes Material auf der Grundlage eines Säurebildners, einer Kohlenstoff liefernden Verbindung und eines Gasbildners. Bevorzugt umfasst das intumeszierende Material als Säurebildner ein Salz oder einen Ester einer anorganischen, nichtflüchtigen Säure ausgewählt aus Schwefelsäure, Phosphorsäure und Borsäure, als Kohlenstoff liefernde Verbindung eine Polyhydroxyverbindung und/oder ein thermoplastisches oder duroplastisches polymeres Harzbindemittel und als Gasbildner ein Chlorparaffin, Melamin, eine Melaminverbindung, insbesondere Melamincyanurat, Melaminphosphat, Melaminpolyphosphat, Tris(hydroxyethyl)-cyanurat, Cyanamid, Dicyanamid, Dicyandiamid, Biguanidin und/oder ein Guanidinsalz, insbesondere Guanidinphosphat oder Guanidinsulfat.

Der verbundbildende Träger kann ferner als ablatives Additiv eine anorganische Verbindung, die Wasser, z.B. als Kristallwasser, fest eingelagert hat und bei Temperaturen bis 100°C nicht austrocknet, dieses aber im Brandfall ab 120°C freisetzt und dadurch temperaturführende Teile kühlen kann, enthalten, bevorzugt ein bei der Brandtemperatur bzw. bei Beflammung wasserabgebendes anorganisches Hydroxid oder Hydrat, insbesondere Aluminiumhydroxid, Aluminiumoxidhydrate oder teilhydratisierte Aluminiumhydroxide. Es kommen aber auch andere, bei der Beflammung wasserabgebende anorganische Hydroxide oder Hydrate in Betracht, wie sie in der EP 0 274 068 A2 beschrieben sind.

Derartige Verbindungen, die als Stoffgemisch in der erfindungsgemäßen Brandschutz-Einlage eingesetzt werden können, sind dem Fachmann bekannt und beispielsweise in den folgenden Druckschriften offenbart, auf die hiermit ausdrücklich Bezug genommen sei: DE 30 25 309 A1, DE 30 41 731 A1, DE 33 02 416 A1, DE 34 11 327 A1, EP 0 043 952 B1, EP 0 051 106 B1, EP 0 061 024 B1, EP 0 116 846 B1, EP 0 158 165 B1, EP 0 274 068 A2, EP 1 347 549 A1, EP 1 641 895 B1 und DE 196 53 503 A1.

Die Herstellung des Formkörpers erfolgt durch Formschäumen, wie Reaktionsschäumen (RIM), entsprechend der DE 3917518, z.B. mit Fomox^{®}-Brandschutzschaum oder der Dämmschicht bildende Baustoff HILTI CP 65GN. Materialien, die für erfindungsgemäße Zwecke eingesetzt werden können, sind aus EP 0061024 A1, EP 0051106 A1, EP 0043952 A1, EP 0158165 A1, EP 0116846 A1 und US 3,396,129 A sowie EP 1347549 A1 bekannt. Bevorzugt besteht der Formkörper aus einem intumeszenzfähigen Polyurethanschaum, wie er aus der EP 0061024 A1, DE 3025309 A1, DE 3041731 A1, DE 3302416 A und DE 3411 327 A1 bekannt ist.

Der Block aus gegebenenfalls intumeszierendem Material ist vorzugsweise mit einer Verstärkungseinlage versehen. Diese Verstärkungseinlage dient zur Stabilisierung der im Brandfall entstehenden Intumeszenz-Kruste und hilft zu verhindern, dass diese in Teilen aus der Brandschutzmanschette herausfällt. Zu diesem Zweck ist es vorteilhaft, die Verstärkungseinlage in der Oberfläche des Blocks aus gegebenenfalls intumeszierendem Material zu positionieren, um die Außenflächen zu stabilisieren.

Die Verstärkungseinlage wird vorzugsweise durch eine Matte, ein Gitter oder ein Gewebe gebildet. Ein solcher Aufbau bietet eine gute Durchdringung des Blocks aus gegebenenfalls intumeszierendem Material, und die Verstärkungseinlage behält ihre stabilisierenden Eigenschaften auch bei vereinzelten strukturellen Schäden bei.

In einer bevorzugten Ausführungsform besteht die Verstärkungseinlage aus einem temperaturbeständigen Material, beispielsweise Metall, Glasfasern, Basaltfasern, Kohlenstofffasern oder Keramikfasern. Auch ein hybrider Aufbau der Verstärkungseinlage aus mehreren Materialien ist möglich. Die im Vergleich zum intumeszierendem Material höhere Temperaturbeständigkeit ist vorteilhaft, da so die Verstärkungseinlage von der das intumeszierende Material aktivierenden Temperatur nicht beeinträchtigt wird und auf diese Weise ihre stabilisierende Funktion ausüben kann.

In einer weiteren bevorzugten Ausführungsform besteht die Verstärkungseinlage aus Streckmetall. Dies ist hinsichtlich der Stabilisierungswirkung vorteilhaft.

Zur Befestigung der Brandschutzmanschette weist diese erfindungsgemäß mehrere Befestigungslaschen an ihren Seitenabschnitten auf. Diese erlauben eine sichere Befestigung der Brandschutzmanschette an Wänden und Decken und können beispielsweise über Steckvorrichtungen mit den Seitenabschnitten verbunden werden. Die Brandschutzmanschette kann bei der Befestigung direkt auf die Wand aufgesetzt werden. Ein zusätzlicher Rahmen oder Aufdoppeln sind nicht notwendig. Auch ist es möglich, die Brandschutzmanschette direkt über ein bereits vorhandenes Brandschott zu montieren, so dass diese als Reparaturschott wirkt.

Der Block aus gegebenenfalls intumeszierendem Material der Brandschutzmanschette ist in einer bevorzugten Ausführungsform ein Formteil und wird in einem oder mehreren Stücken in den Rahmen eingesetzt und mit diesem verbaut. Die Formteile können eine beliebige Form haben, sind jedoch vorzugsweise regelmäßige Polyeder, beispielsweise Quader. Dies hat den Vorteil, dass die Anzahl der für die Brandschutzmanschette verwendeten Blöcke einfach auf die zu abzuschottende Öffnung abgestimmt werden kann. Die Reduzierung der Formteile auf wenige modulare Gleichteile bietet darüber hinaus aus logistischer und ökonomischer Sicht weitere Vorteile.

In einer alternativen Ausführungsform wird die Brandschutzmanschette dadurch gebildet, dass zuerst der Rahmen montiert wird und anschließend der Block aus gegebenenfalls intumeszierendem Material durch ein Schaummaterial mit gegebenenfalls intumeszierenden Eigenschaften eingebracht wird, wobei das Schaummaterial ein aufschäumendes Material ist, welches in den Rahmen eingebracht wird und dann durch das Aufschäumen diesen ausfüllt, wie beispielsweise ein Ortsschaum. Der Vorteil besteht hierbei darin, dass anstelle von Formteilen nur das Schaummaterial vorgehalten werden muss und ein individuell angepasster Block aus gegebenenfalls intumeszierendem Material automatisch durch das Ausschäumen des Rahmens vor Ort entsteht.

In einer bevorzugten Ausführungsform ist der Rahmen der Brandschutzmanschette modular aufgebaut. Das bedeutet insbesondere, dass dieser aus wenigen Gleichteilen aufgebaut ist und auf vielfältige Weise gestaltet werden kann. Dies hat den Vorteil, dass der Rahmen einfach vor Ort individuell an den Öffnungsquerschnitt angepasst werden kann und eine effiziente Materialnutzung möglich ist. Zusätzlich bietet eine Reduzierung der Teile, aus denen der Rahmen aufgebaut ist, auf wenige modulare Gleichteile darüber hinaus aus logistischer und ökonomischer Sicht weitere Vorteile.

Vorzugsweise besteht der Rahmen der Brandschutzmanschette aus mehreren Einzelteilen, die durch eine Steckverbindung miteinander verbunden sind. Somit kann der Rahmen, in Einzelteilen zerlegt, kompakt transportiert und durch die Steckverbindungen einfach montiert werden.

In einer weiteren Ausführungsform wird der Rahmen der Brandschutzmanschette aus einem durchgehenden Band gebildet, das auf die gewünschte Länge zugeschnitten und dessen Ende mit seinem Anfang verbunden wird. Auf diese Weise lässt sich der Rahmen individuell an verschiedene Öffnungsquerschnitte anpassen.

Weitere Vorteile und Merkmale ergeben sich aus der nachfolgenden Beschreibung in Verbindung mit den beigefügten Zeichnungen. In diesen zeigen:
- Figur 1 eine Schnittansicht einer ersten Ausführungsform der erfindungsgemäßen Brandschutzmanschette, die vor einem Leitungsdurchgang angebracht wurde,
- Figur 2a in einer Draufsicht in Richtung der an der Wand anliegenden Fläche eine Brandschutzmanschette mit einem modular aufgebauten Rahmen gemäß einer zweiten Ausführungsform der Erfindung,
- Figur 2b eine erste Seitenansicht,
- Figur 2c eine zweite Seitenansicht, und
- Figur 2d eine perspektivische Ansicht der zweiten Ausführungsform der erfindungsgemäßen Brandschutzmanschette.

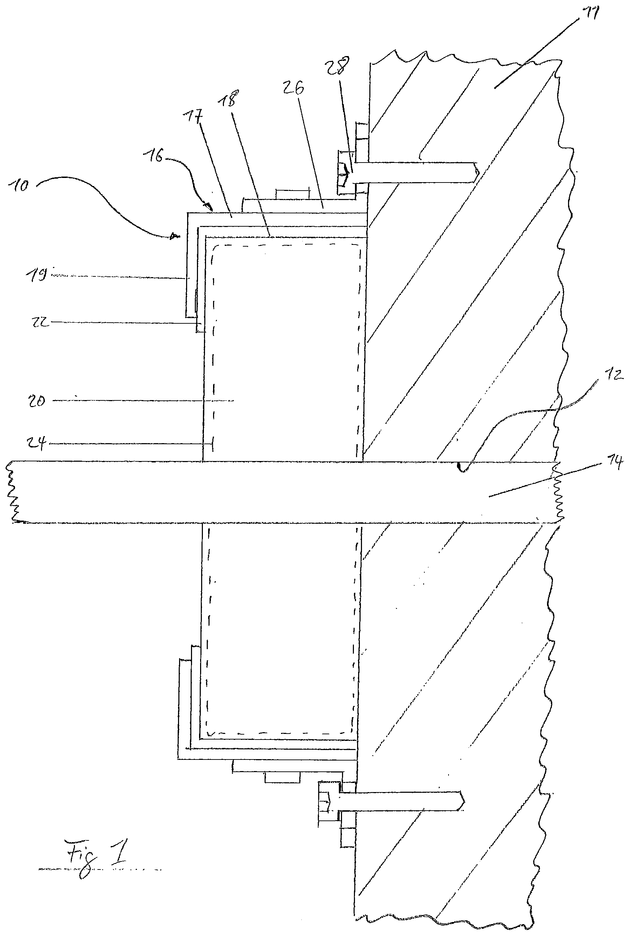

In Figur 1 ist eine erste Ausführungsform einer Brandschutzmanschette 10 gezeigt, die an einer Öffnung, z.B. in einer Wand 11, vor einem Leitungsdurchgang 12 mit einer Leitung 14 angebracht ist. Die Brandschutzmanschette enthält einen Rahmen 16, einen darin liegenden Block 20 aus gegebenenfalls intumeszierendem Material sowie eine dazwischen angeordnete intumeszierende Einlage 22 und ist über Befestigungslaschen 26 mit der Wand 11 verbunden. Die Leitung 14 ist beispielsweise ein Wasserrohr aus Kunststoff oder weist ein oder mehrere Kabel auf.

Der Rahmen 16 weist mehrere Seitenabschnitte 17 auf, die den Block 20 an dessen Seitenrändern 18 umgeben und zu denen sich senkrecht mehrere Frontabschnitte 19 erstrecken. Auf der dem Block 20 abgewandten Seite sind an diesen Seitenabschnitten 17 mehrere Befestigungslaschen 26 vorgesehen.

Der Block 20 verfügt über eine Verstärkungseinlage 24, die vorzugsweise in die äußere Oberfläche des Blocks 20 integriert ist. Diese Verstärkungseinlage 24 kann durch eine Matte, ein Gitter oder ein Gewebe gebildet sein.

Vorzugsweise besteht die Verstärkungseinlage 24 aus einem besonders temperaturbeständigen Material, wie beispielsweise Metall, Glasfasern, Basaltfasern, Kohlenstofffasern, Keramikfasern oder einem Hybrid-Material.

Alternativ kann für die Verstärkungseinlage 24 Streckmetall verwendet werden.

Der Block 20 kann als Formteil, beispielsweise in Form eines Quaders, vorgesehen sein. Der Block 20 ist geringfügig größer als der ihn umfassende Rahmen 16, um einen sicheren Sitz des Blocks 20 im Rahmen 16 zu gewährleisten. Der Block 20 ist 2 mm bis 6 mm höher als die Seitenabschnitte 17 und kann dank dieses Überstands zur Wandseite so an der Wand 11 montiert werden, dass das intumeszierende Material mit Vorspannung an die Oberfläche gedrückt wird.

Alternativ kann der Block 20 auch durch ein in den Rahmen 16 eingebrachtes Schaummaterial gebildet werden. Hierbei wird zuerst der Rahmen 16 inklusive der intumeszierenden Einlage 22 vor dem Leitungsdurchgang 12 befestigt und anschließend der durch den Rahmen 16 umspannte Raum mit einem intumeszierendem Schaummaterial ausgespritzt. Die Verstärkungseinlage 24 kann, je nach Ausgestaltung, zu verschiedenen Zeitpunkten eingebracht werden.

Die intumeszierende Einlage 22 ist zwischen dem Rahmen 16 und dem Block 20 eingespannt und erstreckt sich entlang der Seitenabschnitte 17 und den jeweiligen Frontabschnitten 19.

Die Befestigungslaschen 26, die beispielsweise winkelförmige Bleche sind, sind auf der Außenseite des Rahmens 16 mit den Seitenabschnitten 17 verbunden. Diese Verbindung kann beispielsweise in Form einer Steckverbindung mittels Laschen erfolgen oder auch über zusätzliche Verbindungselemente, wie Schrauben oder Niete, ausgeführt sein.

Mit Hilfe von Befestigungsmitteln 28 kann die Brandschutzmanschette 10 über die an den Seitenabschnitten 17 angebrachten Befestigungslaschen 26 an der Wand 11 befestigt werden. Indem beispielsweise Schrauben als Befestigungsmittel 28 verwendet werden, kann die Vorspannung der Brandschutzmanschette 10 durch das Anziehen dieser eingestellt werden.

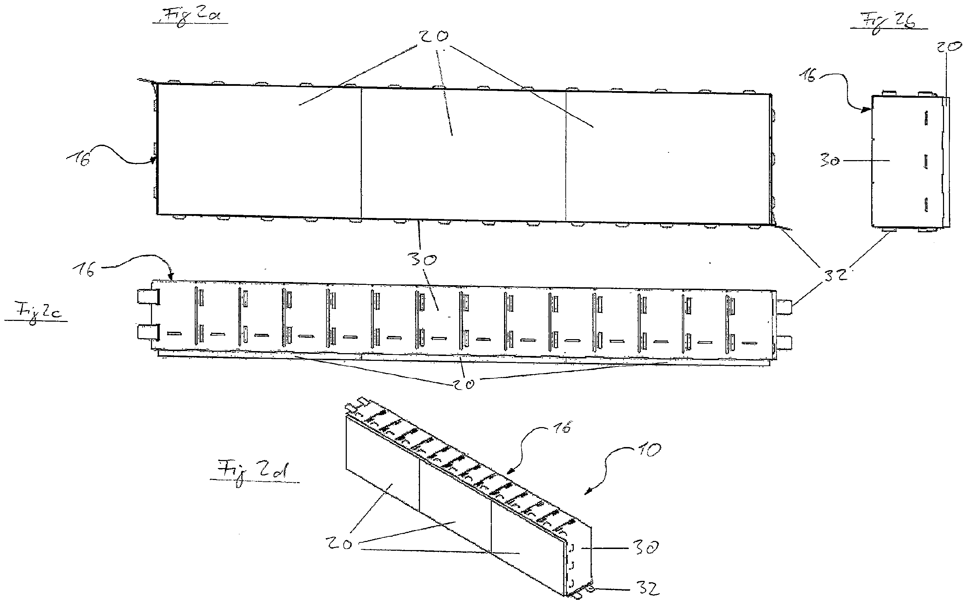

In den Figuren 2a bis 2d ist eine zweite Ausführungsform einer Brandschutzmanschette 10 in verschiedenen Ansichten gezeigt, deren Rahmen 16 modular aufgebaut ist und vorzugsweise aus mehreren Einzelteilen 30 besteht, die durch Steckverbindungen 32 miteinander verbunden sind.

In der dargestellten Variante besteht die Brandschutzmanschette 10 aus drei quaderförmigen Blöcken 20 aus gegebenenfalls intumeszierendem Material und einem Rahmen 16 aus zwei L-förmigen Einzelteilen 30. Diese L-förmigen Einzelteile 30 können auch gerade Bänder sein, die insbesondere vor Ort im rechten Winkel gebogen wurden, um einen an den Öffnungsquerschnitt angepassten Rahmen 16 zu bilden.

In einer (nicht dargestellten) Ausführungsform wird der Rahmen 16 aus einem durchgehenden Band gebildet, das auf die gewünschte Länge zugeschnitten und an seinen Enden verbunden wird.

In einer (nicht dargestellten) Ausführungsform ist die Brandschutzmanschette 10 mindestens zweiteilig, wobei auch nur ein Teil, insbesondere eine Hälfte, als vollwertige Brandschutzmanschette 10 verwendet werden kann.

Die Brandschutzmanschette 10 ist insbesondere so bemessen, dass auch bei Wänden mit einer Stärke von 100 mm die Feuerwiderstandsklasse EI 120 erreicht wird.

Im Vertrieb ist es außerdem möglich, die Brandschutzmanschette 10 nicht nur als komplettes Set anzubieten, sondern auch Einzelteile dieser. Insbesondere der Rahmen 16 und der Block 20 aus gegebenenfalls intumeszierendem Material können einzeln vertrieben werden.

## Patentansprüche

1. Brandschutzmanschette (10) zum Abschotten von durch Wände (11) oder Decken hindurchführende Öffnungen, insbesondere von Leitungsdurchgängen (12), mit einem Rahmen (16) und zumindest einem darin angeordneten Block (20) aus gegebenenfalls intumeszierendem Material, wobei zwischen dem Block (20) und dem Rahmen (16) eine intumeszierende Einlage (22) angeordnet ist, wobei der Block (20) den vom Rahmen (16) und intumeszierender Einlage (22) umspannten Raum bis auf gegebenenfalls hindurchgehende Rohre ausfüllt, und wobei der Rahmen (16) mehrere Seitenabschnitte (17) aufweist, die den Block (20) an dessen Seitenrändern (18) umgeben, **gekennzeichnet durch** mehrere sich senkrecht zu den Seitenabschnitten (17) erstreckenden Frontabschnitte (19) und **dadurch**, dass der Block (20) um 2 bis 6 mm höher ist als die Seitenabschnitte (17), und dass an den Seitenabschnitten (17) mehrere Befestigungslaschen (26) vorgesehen sind.

2. Brandschutzmanschette (10) nach Anspruch 1, **dadurch gekennzeichnet, dass** die intumeszierende Einlage (22) sich entlang mindestens einem Seitenabschnitt (17) und gegebenenfalls entlang des diesem zugeordneten Frontabschnittes (19) erstreckt.

3. Brandschutzmanschette (10) nach einem der vorhergehenden Ansprüche, **dadurch gekennzeichnet, dass** der Block (20) mit einer Verstärkungseinlage (24) versehen ist.

4. Brandschutzmanschette (10) nach Anspruch 3, **dadurch gekennzeichnet, dass** die Verstärkungseinlage (24) durch eine Matte, ein Gitter oder ein Gewebe gebildet ist.

5. Brandschutzmanschette (10) nach Anspruch 3 oder Anspruch 4, **dadurch gekennzeichnet, dass** die Verstärkungseinlage (24) aus Metall, Glasfasern, Basaltfasern, Kohlenstofffasern oder Keramikfasern besteht.

6. Brandschutzmanschette (10) nach Anspruch 3, **dadurch gekennzeichnet, dass** die Verstärkungseinlage (24) aus Streckmetall besteht.

7. Brandschutzmanschette (10) nach einem der vorhergehenden Ansprüche, **dadurch gekennzeichnet, dass** der Block (20) ein Formteil ist.

8. Brandschutzmanschette (10) nach einem der Ansprüche 1 bis 6, **dadurch gekennzeichnet, dass** der Block (20) durch ein in den Rahmen (16) eingebrachtes Schaummaterial gebildet ist.

9. Brandschutzmanschette (10) nach einem der vorhergehenden Ansprüche, **dadurch gekennzeichnet, dass** der Rahmen (16) modular aufgebaut ist.

10. Brandschutzmanschette (10) nach Anspruch 9, **dadurch gekennzeichnet, dass** der Rahmen (16) aus mehreren Einzelteilen (30) besteht, die durch eine Steckverbindung (32) miteinander verbunden sind.

11. Brandschutzmanschette (10) nach Anspruch 9, **dadurch gekennzeichnet, dass** der Rahmen (16) aus einem durchgehenden, auf die gewünschte Länge geschnittenen Band besteht, dessen Ende so mit dem Anfang verbunden ist, dass der Rahmen (16) gebildet ist.

## Claims

1. Fire protection sleeve (10) for sealing openings, in particular cable passages (12), passing through walls (11) or ceilings, said sleeve comprising a frame (16) and at least one block (20) which is arranged therein and is made of optionally intumescent material, an intumescent insert (22) being arranged between the block (20) and the frame (16), the block (20) filling the space spanned by the frame (16) and the intumescent insert (22) except for any pipes passing through, and the frame (16) having a plurality of side portions (17) which surround the block (20) at its side edges (18), **characterized by** a plurality of front portions (19) which extend perpendicularly to the side portions (17) and in that the block (20) is higher than the side portions (17) by 2 to 6 mm, and in that a plurality of fastening tabs (26) are provided on the side portions (17).

2. Fire protection sleeve (10) according to claim 1, **characterized in that** the intumescent insert (22) extends along at least one side portion (17) and optionally along the front portion (19) associated therewith.

3. Fire protection sleeve (10) according to either of the preceding claims, **characterized in that** the block (20) is provided with a reinforcing insert (24).

4. Fire protection sleeve (10) according to claim 3, **characterized in that** the reinforcing insert (24) is formed by a mat, a grid or a woven fabric.

5. Fire protection sleeve (10) according to either claim 3 or claim 4, **characterized in that** the reinforcing insert (24) consists of metal, glass fibers, basalt fibers, carbon fibers or ceramic fibers.

6. Fire protection sleeve (10) according to claim 3, **characterized in that** the reinforcing insert (24) consists of expanded metal.

7. Fire protection sleeve (10) according to any of the preceding claims, **characterized in that** the block (20) is a molded part.

8. Fire protection sleeve (10) according to any of claims 1 to 6, **characterized in that** the block (20) is formed by a foam material introduced into the frame (16).

9. Fire protection sleeve (10) according to any of the preceding claims, **characterized in that** the frame (16) is modular.

10. Fire protection sleeve (10) according to claim 9, **characterized in that** the frame (16) consists of a plurality of individual parts (30) which are connected to one another by means of a plug-in connection (32).

11. Fire protection sleeve (10) according to claim 9, **characterized in that** the frame (16) consists of a continuous strip cut to the desired length, the end of which is connected to the beginning in such a way that the frame (16) is formed.

## Revendications

1. Manchon coupe-feu (10) permettant d'obturer des ouvertures traversant des murs (11) ou des plafonds, en particulier des passages de câbles (12), comportant un cadre (16) et au moins un bloc (20) disposé dans celui-ci et réalisé en un matériau éventuellement intumescent, un insert intumescent (22) étant disposé entre le bloc (20) et le cadre (16), le bloc (20) remplissant l'espace couvert par le cadre (16) et l'insert intumescent (22) à l'exception des éventuels tubes le traversant, et le cadre (16) présentant plusieurs sections latérales (17) entourant le bloc (20) au niveau de ses bords latéraux (18), **caractérisé par**
plusieurs sections frontales (19) s'étendant perpendiculairement aux sections latérales (17) et en ce que le bloc (20) est 2 à 6 mm plus haut que les sections latérales (17), et en ce que plusieurs pattes de fixation (26) sont prévues sur les sections latérales (17).

2. Manchon coupe-feu (10) selon la revendication 1, **caractérisé en ce que** l'insert intumescent (22) s'étend le long d'au moins une section latérale (17) et éventuellement le long de la section frontale (19) y étant associée.

3. Manchon coupe-feu (10) selon l'une des revendications précédentes, **caractérisé en ce que** le bloc (20) est pourvu d'un insert de renfort (24).

4. Manchon coupe-feu (10) selon la revendication 3, **caractérisé en ce que** l'insert de renfort (24) est formé par un mat, une grille ou un tissu.

5. Manchon coupe-feu (10) selon la revendication 3 ou la revendication 4, **caractérisé en ce que** l'insert de renfort (24) est constitué de métal, de fibres de verre, de fibres de basalte, de fibres de carbone ou de fibres céramiques.

6. Manchon coupe-feu (10) selon la revendication 3, **caractérisé en ce que** l'insert de renfort (24) est en métal déployé.

7. Manchon coupe-feu (10) selon l'une des revendications précédentes, **caractérisé en ce que** le bloc (20) est une pièce moulée.

8. Manchon coupe-feu (10) selon l'une des revendications 1 à 6, **caractérisé en ce que** le bloc (20) est formé par un matériau en mousse introduit dans le cadre (16).

9. Manchon coupe-feu (10) selon l'une des revendications précédentes, **caractérisé en ce que** le cadre (16) est de construction modulaire.

10. Manchon coupe-feu (10) selon la revendication 9, **caractérisé en ce que** le cadre (16) se compose de plusieurs pièces individuelles (30) qui sont reliées les unes aux autres par une connexion enfichable (32).

11. Manchon coupe-feu (10) selon la revendication 9, **caractérisé en ce que** le cadre (16) est constitué d'une bande continue coupée à la longueur souhaitée, dont l'extrémité est reliée au début de telle manière que le cadre (16) est formé.
